# EUROPÄISCHE PATENTSCHRIFT

(11) **EP 2 106 286 B1**
(45) Veröffentlichungstag und Bekanntmachung des Hinweises auf die Patenterteilung: **12.08.2015**
(21) Anmeldenummer: 04765218.5
(22) Anmeldetag: 15.09.2004
(51) Int. Cl.: B01D 69/10

(54) **FILTERMEDIUM**
FILTER MEDIUM
MATERIAU FILTRANT

(30) Priorität: 19.09.2003 DE 10343456
(43) Veröffentlichungstag der Anmeldung: 07.10.2009
(73) Patentinhaber: X-Flow B.V., 7547 TC Enschede (NL)
(72) Erfinder: KAMLEITER, Michael, 70188 Stuttgart (DE); GUDERNATSCH, Michael, 70193 Stuttgart (DE)
(74) Vertreter: Bartels, Martin Erich Arthur
(86) Internationale Anmeldenummer: PCT/EP2004/010304
(87) Internationale Veröffentlichungsnummer: WO 2005/032699

(56) Entgegenhaltungen:
- EP-A- 0 355 400
- WO-A-99/61130
- US-A- 4 072 793
- US-A- 4 913 817
- US-A- 4 954 388
- PATENT ABSTRACTS OF JAPAN Bd. 017, Nr. 167 (C-1043), 31. März 1993 (1993-03-31) -& JP 04 326929 A (NITTO DENKO CORP), 16. November 1992 (1992-11-16)

## Beschreibung

Die Erfindung betrifft ein Filtermedium.

Ein Filtermedium ist aus der JP H04-326929 A bekannt, welche eine Trennmembran offenbart, die auf beiden Seiten eines stützenden und drainierenden Zentralgewebes aufgebracht ist, wobei das Zentralgewebe in eine schwammartige Schicht der Membrane eingebettet ist. Der zwischen den beiden Trennmembranen angeordnete Teil des Gewebes bildet einen Durchgang für ein zu filtrierendes Fluid. Die Außenseiten der Trennmembrane sind einer Rohseite einer Fluidfiltration zugeordnet. Durch die feste Einbindung in und Verbindung mit dem zentral angeordneten Gewebe werden allzu große Belastungen und Beschädigungen der semipermeablen Membrane bei zu großen Drücken bzw. Druckdifferenzen vermieden.

US 4 954 388 offenbart eine mit Gewebe verstärkte Kompositmembran. Die Membran ist zwischen zwei Gewebelagen mit einer porösen Schicht angeordnet. Die mechanisch verstärkte mehrlagige Kompositmembran ist für elektrolytische Prozesse geeignet und weist insbesondere einen durchgehenden ionenaustauschenden Polymerfilm auf, welcher auf einer oder beiden Seiten eines verstärkenden Gewebes aufgebracht ist. Das Gewebe ist vorzugsweise aus halogenhaltigen synthetischen Polymerfasern, beispielsweise aus Polytetrafluoroethylen, hergestellt.

Durch die EP 0 761 292 A1 sind selbsttragende Kapillarmembranen bekannt für den Einsatz bei höherem Druck mit innenliegender Trennschicht. Diese bekannte Kapillarmembran ist mit einem nahtlosen Außenmantel versehen, welcher als geschlossene, flüssigkeitsdurchlässige Diagonalarmierung ausgeführt ist. Die Diagonalarmierung besteht aus Einzelfäden, die ihrerseits entweder aus Monofilen oder aus Multifilen bestehen. Die Materialauswahl für diese Monofile oder Multifile ist nahezu unbeschränkt und es finden z.B. Polyestergarne, Polyaramide, Polymerfasern, Glasfasern aber auch Metallfäden Verwendung. Die Einzelfäden der Diagonalarmierung werden in einer Geflechtsbindung 1:1 bis 2:1 oder auch 2:2 in einem kontinuierlichen Verfahren als nahtloser Außenmantel auf die Kapillaren aufgebracht. Je nach Wanddicke der Monofile oder Multifile werden dabei Kapillare mit Außendurchmessern von 0,5 mm bis 15 mm hergestellt, wobei die Kapillaren selbst eine mechanische Stabilität aufweisen müssen, die der Fadenspannung beim Armierungsvorgang widersteht. Zwar kann die dahingehend bekannte Kapillarmembran kontinuierlich hergestellt werden und weist aufgrund der genannten Diagonalarmierung auch einen entsprechend hohen Berstdruck auf; dennoch ist das Leistungsvermögen bei der Filtration eingeschränkt und trotz der Abstützung über die flüssigkeitsdurchlässige Diagonalarmierung kann es im harten Filtrationsbetrieb zu einem Versagen des derart umschlossenen Membranmaterials selbst kommen.

Durch die DE 41 42 417 A1 ist eine Ionenaustauschermembran bekannt, die zur Beseitigung dieser Nachteile eine Verstärkung vorsieht mit einem mehraxialen, vorzugsweise triaxialen Garnsystem, wobei es dabei als vorteilhaft angesehen wird, um in einer Chloralkalizelle eine niedrige Zellenspannung und gute Stabilität für die Handhabung des verstärkenden Gewebes und die verstärkte Membran zu erhalten, ein offenes verstärkendes Gewebe und eine dünne Membran einzusetzen. Eine dünne Membran erfordert wiederum ein dünnes Gewebe und eine geringe Gesamtdicke der Folienschichten, die zur Laminierung des verstärkten Kationenaustauscherharzes verwendet werden. Gemäß Definition ist dabei ein offenes Gewebe ein solches, das, wenn es von einer Richtung senkrecht zur Ebene des Gewebes beleuchtet wird, einem großen Anteil des auffallenden Lichtes ermöglicht, durch das Gewebe hindurchzugehen. Ein dahingehendes Gewebe mit einem hohen Prozentsatz an offenen Stellen (Gewebelücken) ist nach der bekannten Lösung erwünscht, weil die offenen Stellen es den Kationen ermöglichen, vom Anolyten zum Katholyten beim Chloralkaliverfahren zu passieren. So ermöglicht ein offenes Gewebe eine niedrige Zellenspannung und deshalb einen niedrigeren Stromverbrauch. Die bekannten Gewebe in der Art einer Leinwandbindung oder einer Dreherbindung werden dabei als nachteilig angesehen, weil es ihnen zum einen an der Formbeständigkeit mangelt bzw. zum anderen einen niedrigen Modul und niedrige Festigkeit in einer Schrägrichtung des Gewebeverbundes aufweisen. Demgemäß schlägt die bekannte Lösung eine triaxial gewebte Ware vor, also ein Gewebe, das durch ein Webverfahren hergestellt wird, bei dem man drei Garne in einem Winkel von jeweils 60° zueinander verwendet. Insbesondere, wenn das triaxiale Gewebe aus Feingarnen hergestellt ist, lässt sich dergestalt ein dünnes Gewebe erhalten, das unter verschiedenen Belastungen stabil ist, selbst wenn das Gewebe den gewünschten hohen Grad an offenen Stellen hat. Nachteilig an dieser bekannten Lösung ist, dass die genannten multiaxialen Gewebe relativ aufwendig und mithin teuer in der Herstellung sind und somit das Membranmaterial entsprechend verteuern. Ferner ist die dahingehende Lösung gleichfalls in der Filtrationsleistung von ihrem grundsätzlichen Aufbau des Membranmaterials her eingeschränkt.

Durch die EP 0 355 400 A2 ist ein Filtermedium für kuchenbildende Filtrationsprozesse bekannt mit einer Filtermembran, die beidseitig in eine Gewebekonstruktion eingebettet ist, welche eine mechanische Schutzfunktion übernimmt. Mit dem bekannten Filtermedium lässt sich auch innerhalb von Filteranlagen, bei denen das Filtermedium mechanisch außergewöhnlich stark belastet wird, Suspensionen verarbeiten und Partikel im submikroporösen Bereich aus einem Fluidstrom ausfiltrieren. Bei einer bevorzugten Ausführungsform der bekannten Lösung kann die Membranmasse zwischen zwei Gewebelagen angeordnet sein, wobei die Membranmasse auf eine kompakte starke Trägergewebelage aufgebracht ist und wobei in die obere Schicht der Membranmasse eine Schutzgewebelage eingelassen wird. Die dahingehende Schutzgewebelage ist als offenmaschiges Gewebe ausgebildet und dergestalt ist ein Sandwich-Aufbau für das Filtermedium für kuchenbildende Filtrationsprozesse erreicht. Das dahingehende gattungsgemäße Filtermedium ist dergestalt den robusten mechanischen Anforderungen gewachsen, welche die Filtrationstechnik üblicherweise stellt und insbesondere beim Abheben oder Abwerfen des Filterkuchens wird das Filtermedium dahingehend erheblichen mechanischen Belastungen ausgesetzt, welche mit dem bekannten Filtermedium beherrschbar sind. Dennoch ist auch bei dieser robust ausgestalteten Lösung die Filtrationsleistung nicht befriedigend.

Ausgehend von diesem Stand der Technik liegt der Erfindung die Aufgabe zugrunde, unter Beibehalten der Vorteile im Stand der Technik die bekannten Lösungen dahingehend weiter zu verbessern, dass mit der erfindungsgemäßen Lösung ein Filtermedium erhalten ist, das kostengünstig herstellbar bei robuster Auslegung eine hohe Filtrationsleistung gewährleistet.

Eine dahingehende Aufgabe löst ein Filtermedium mit den Merkmalen des Patentanspruches 1 in seiner Gesamtheit.

Erfindungsgemäß ist ein Filtermedium mit mindestens einer Filtermembran, die eine Gewebelage als mechanische Stütz- und Schutzschicht aufweist; mindestens einer zweiten Filtermembran, die eine zweite Gewebelage als mechanische Stütz- und Schutzschicht aufweist; und einer dritten Gewebelage, die sich zwischen den beiden einander benachbarten Filtermembranen erstreckt, vorgesehen, wobei über Bindefäden der ersten und zweiten Gewebelage, die die dritte Gewebelage durchgreifen, die beiden benachbarten Filtermembranen miteinander verbunden sind.

Dadurch, dass mindestens eine weitere Filtermembran mit einer weiteren Gewebelage als mechanische Stütz- und Schutzschicht vorhanden ist, dass sich zwischen den beiden einander benachbarten Filtermembranen eine dritte Gewebelage erstreckt und dass über Fäden der beiden anderen Gewebelagen, die die dritte Gewebelage durchgreifen, die beiden benachbarten Filtermembranen miteinander verbunden sind, ist eine doppelseitige Filterstruktur geschaffen, wobei beidseitig auf ein gleichzeitig stützendes und drainierenden Zentralgewebe als dritte Gewebelage je eine oder mehrere feine Gewebeschichten in Form der beiden anderen Gewebelagen kraftschlüssig aufgebracht sind, so dass die beiden äußeren Gewebeschichten je eine ebenfalls kraftschlüssig verbundene Membran tragen, welche an ihrer Außenseite das zu filtrierende Medium kontaktiert. Demgemäß ist es möglich, das zu filtrierende Medium von beiden Seiten her, also von der Ober- und der Unterseite der Doppelmembran dieser zuzuführen, was zu einer deutlichen Erhöhung der Filtrationsleistung führt und gleichzeitig ist ein fester Verbund für die Doppelmembran erhalten, so dass diese auch einem robusten Einsatz in Filtrationsanlagen gerecht wird und eine lange Einsatzdauer aufweist.

Die Triebkraft für die Filtration kann sowohl durch filtratseitigen Unterdruck als auch durch mediumseitigen Überdruck oder durch eine Kombination aus beidem erhalten werden. Die mediumseitige Querströmung kann durch filterparallele konvektive Strömung oder durch Luftblasen oder beides erreicht werden. Die erfindungsgemäße doppelseitige Filterstruktur ist insbesondere auch gut geeignet für Spülvorgänge, bei denen eine Triebkraftumkehrung erfolgt. Ferner ist eine Beaufschlagung des Filters mit Reinigungschemikalien während der Rückspülung ohne weiteres möglich.

Die erfindungsgemäße doppelseitige Filterstruktur wird vorzugsweise kontinuierlich gefertigt und die Längsränder werden während der Fertigung verschlossen. Dabei können neben Direktverguss auch Techniken wie Schweißen, Kleben, Bördeln, Rändeln usw. zum Einsatz kommen. Nach erfolgtem Zuschnitt können auch die Stirnseiten mit den genannten Techniken verschlossen werden oder in Querrohre eingegossen werden, durch welche das Filtrat abgezogen werden kann.

Die doppelseitige Filterstruktur kann in verschiedensten Geometrien zum Einsatz gebracht werden. Sie kann im Besonderen als flache Fahnen in das zu filtrierende Medium getaucht werden; mehrlagiges stapel- oder spiralförmiges Rollen und Einbringen in Rohre (Stack) ist ebenso möglich.

Die erfindungsgemäße Lösung braucht nicht auf die Ausgestaltung in der Art einer Doppelmembran beschränkt zu sein, vielmehr lässt sich unter Zwischenschalten weiterer Gewebelagen vergleichbar der dritten Gewebelage in Übereinanderanordnung eine Mehrschichtmembran erhalten. Durch den genannten Gewebelagenverbund ist darüber hinaus ein sicherer Aneinanderhalt der einzelnen Gewebelagen auch bei hoher Beanspruchung gewährleistet.

Bei einer bevorzugten Ausführungsform des erfindungsgemäßen Filtermediums besteht die jeweilige Gewebelage aus Kett- und Schussfäden, wobei die Gewebelagenverbindung über zusätzliche Bindefäden erfolgt, die an mindestens einer Bindestelle von der Gewebelage der einen Filtermembran in die benachbart angeordnete Gewebelage der anderen Filtermembran wechseln; oder abwechselnd von einer der zwei äußeren Gewebelagen bis in die benachbart angeordnete dritte Gewebelage. Über das zusätzliche Bindefadensystem lässt sich ohne Störung der eigentlichen Gewebestrukturen ein sicherer Verbund für das Filtermedium erreichen und gleichzeitig sind die Gewebelagen der Filtermembranen mit einem hohen Prozentsatz an offenen Durchlassstellen versehen, so dass in die dergestalt offenporige Filterstruktur hemmnisfrei der Fluidstrom eintreten kann. Vorzugsweise kann dabei vorgesehen sein, dass die erste und die zweite Gewebelage der jeweiligen Filtermembran aus Schussfäden als Querfadensystem besteht und dass das Längsfadensysstem nur aus Bindefäden als Kettfäden aufgebaut ist.

Bei einer anderen Ausführungsform des erfindungsgemäßen Filtermediums ist vorzugsweise die erste und die zweite Gewebelage der jeweiligen Filtermembran aus Kett- und Schussfäden aufgebaut, wobei die Schussfäden unter Durchgreifen der dritten Gewebelage die Verbindung der einander benachbarten Filtermembranen herstellen. Bei der dahingehenden Anordnung wird ein sehr sicherer, hoch belastbarer Verbund der Gewebelagen miteinander erreicht, was jedoch gegebenenfalls zu Lasten der offenen Strukturen der Filtermembranen mit den ihnen zugeordneten Gewebelagen geht.

Bei einer weiteren, besonders bevorzugten Ausführungsform des erfindungsgemäßen Filtermediums besteht die dritte Gewebelage aus Kett- und Schussfäden und die Kett- und Schussfäden der dritten Gewebelage sind im Durchmesser stärker dimensioniert als die eingesetzten Fäden der beiden ersten und zweiten Gewebelage mit der jeweiligen Filtermembran. Aufgrund der dahingehenden Ausgestaltung ist es möglich, die mittlere dritte Gewebelage als Stütz- und Drainagegewebe grob auszulegen, so dass dergestalt in hohem Maße die Filtratableitung für das Filtermedium gewährleistet ist, wohingegen die Filtermembranen den Aufbau einer Feingewebeschicht mit offenporiger Struktur haben.

Bei einer weiteren bevorzugten Ausführungsform des erfindungsgemäßen Filtermediums sind die eingesetzten Fäden aus einem Polyester- oder einem Polyamidmaterial gebildet und für die erste und die zweite Filtermembran wird ein Polymermaterial eingesetzt, vorzugsweise in Form von Polyethersulfon (PES), Polysulfon (PSU), Polyacrylnitril (PAN), Polyvinylidenflorid (PVDF). Vorzugsweise besteht dabei das Polymermaterial aus Polysulfon, welches in Lösungen durch Extrusion und Verfestigung mittels Kontakt mit Wasser erhalten ist.

Bei einer weiteren bevorzugten Ausführungsform des erfindungsgemäßen Filtermediums ist dieses als ebenes Filtermaterial ausgebildet. Die bei der Filtration auftretenden Längszugspannungen werden von den durchlaufenden Längsfäden aufgenommen, wobei die Spannungen am Umfang durch die quer verlaufenden Fäden des Gewebelagenverbundes sicher aufgenommen sind. Dies vermindert das Verschieben der Fäden gegeneinander, so dass unerwünschte Verstreckeffekte während der Beschichtung des Membranmaterials deutlich minimiert sind und die derart gewebeverstärkte Filtrationskapillare widersteht sehr hohen Innendrücken und Längszügen. Als Fadenstärke können hierbei Fäden mit einem Durchmesser von 20 bis 200 *µ*m eingesetzt werden und die Fadenanzahl beträgt 3 bis 6 Stück. Der gewählte Winkel der Querfäden liegt vorzugsweise zwischen 45° bis 90° und der Innendurchmesser liegt bei 1 mm bis 20 mm.

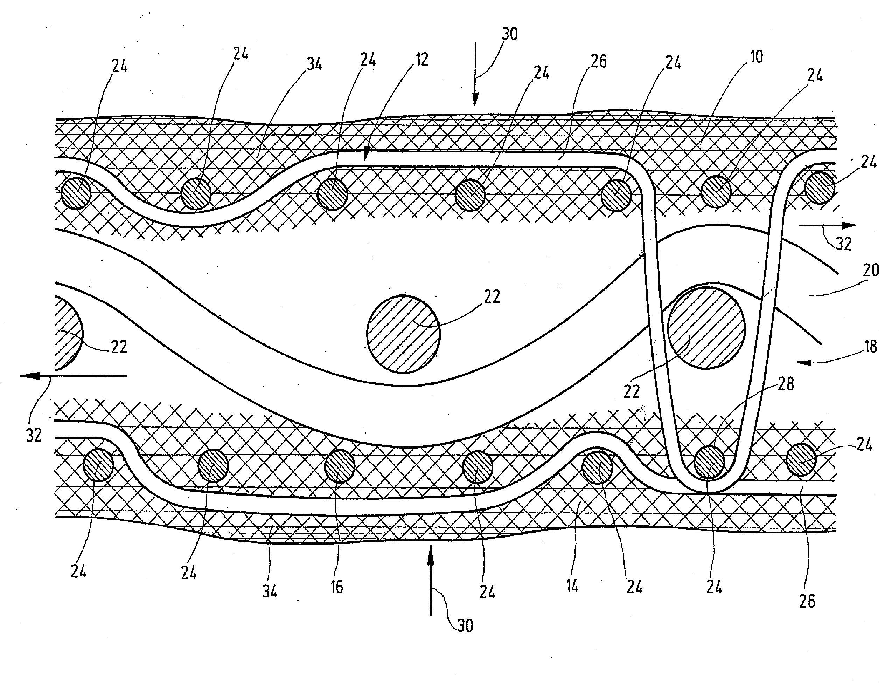

Im Folgenden wird das erfindungsgemäße Filtermedium anhand der einzigen Zeichnung näher erläutert, die in prinzipieller und nicht maßstäblicher Darstellung eine Seitenansicht in der Art eines Querschnittes bezogen auf einen Ausschnitt des Filtermediums wiedergibt.

Das erfindungsgemäße Filtermedium weist eine obere Filtermembran 10 auf mit einer Gewebelage 12 als Stütz- und Schutzschicht. Ferner weist das Filtermedium eine untere weitere Filtermembran 14 auf mit einer weiteren Gewebelage 16 als Stütz- und Schutzschicht. Zwischen den beiden einander benachbarten Filtermembranen 10, 14 verläuft eine dritte Gewebelage 18. Die dahingehende dritte Gewebelage 18 besteht aus einem Fadensystem aus Kettfäden 20 und Schussfäden 22. Die Kettfäden 20 bilden dabei das Längsfadensystem und die Schussfäden 22 das Querfadensystem der dritten Gewebelage 18 aus. Dem Grunde nach besteht auch die Möglichkeit, das genannte Längs- und Querfadensystem dergestalt zu tauschen, dass die genannten Kettfäden 20 das Schussfadensystem und die Schussfäden 22 das Kettfadensystem bilden. Die obere Gewebelage 12 sowie die untere weitere Gewebelage 16 sind gleichfalls aus einem Längs- und Querfadensystem aufgebaut, bestehend aus einzelnen Kettfäden (nicht dargestellt) und Schussfäden 24. Wie des weiteren die Figur zeigt, sind über Fäden 26, die in der Art von Bindefäden ausgebildet sind, die beiden Gewebelagen 12, 16 miteinander verbunden, wobei die dahingehenden Fäden 26 die dritte Gewebelage 18 durchgreifen. Sofern die Gewebelage 14 über die zusätzlichen Bindefäden 26 verfügt, wechseln diese an mindestens einer Bindestelle 28 von der Gewebelage der einen Filtermembran, 10 in die benachbart angeordnete Gewebelage 16 der weiteren Filtermembran 14. Wie die Figur zeigt, ist die Bindestelle 28 dadurch gebildet, dass in Blickrichtung auf die Figur gesehen der Bindefaden 26 der oberen Gewebelage 12 diese verlässt und dabei einen Schussfaden 22 (Querfaden) der dritten Gewebelage 18 an der Stelle untergreift, wo der Kettfaden 20 (Längsfaden) den ihm zugeordneten Schussfaden 22 übergreift, wobei an der genannten Bindestelle 28 der Schussfaden 24 der oberen Filtermembran 10 vom Wechselverbund mit dem zugeordneten Bindefaden 26 freigehalten ist und dieser den darunter liegenden Schussfaden 24 der unteren weiteren Filtermembran 14 untergreift. Im Übrigen bilden die Schussfäden 24 der beiden Filtermembranen 10, 14 eine jeweils fadentragende Brücke für die Bindefäden 26 aus, die insofern drei Schussfäden 24 über- oder untergreifen, bevor in Richtung der Bindestelle 28 gewechselt wird oder der nachfolgende Schussfaden 24 der oberen Gewebelage 12 oder der unteren unter- bzw. übergriffen wird.

Bei einer anderen alternativen Ausführungsform (nicht dargestellt) kann es auch möglich sein, die nicht näher dargestellten Längsfäden im oberen und unteren Gewebelagenverbund 12, 16 ausschließlich durch die Bindefäden 26 zu ersetzen, was zwar die Festigkeit des Verbundes reduziert; im übrigen aber zu einer offenporigen Gewebestruktur für die jeweiligen Filtermembranen 10, 14 führt. Auch wäre es gegebenenfalls möglich, nur eine der Filtermembranen 10 oder 14 dergestalt auszubilden. Des weiteren besteht bei einer nicht näher dargestellten Ausführungsform des erfindungsgemäßen Filtermediums auch die Möglichkeit, auf die Bindefäden 26 zu verzichten und den Verbund über die Längsfäden der jeweils oberen und unteren Gewebelage 12 bzw. 16 herzustellen, die dergestalt durch die dritte Gewebelage 18 dann querwechseln.

Die Kettfäden 20 sowie die Schußfäden 22 der dritten Gewebelage 18 sind im Durchmesser stärker dimensioniert als die eingesetzten Fadensysteme der beiden benachbart angeordneten Gewebelagen 12, 16 mit den Filtermembranen 10, 14. Hierdurch ergibt sich ein sehr steif ausgebildetes Stützund Drainagegewebe für die dritte Gewebelage 18 und gleichzeitig kann das Filtrat über die relativ offene Struktur mit dem im Durchmesser groß dimensionierten Kanalquerschnitt beidseitig der Doppelmembran oberhalb und unterhalb des Längsfadensystems 20 abgeführt werden, sofern gemäß der Teildarstellung nach der Figur das jeweils zu filtrierende Medium beidseitig von oben und von unten her in die Doppelmembranstruktur eintritt. Die Teile des Mediumstroms sind mit 30 und die des Filtratstroms mit 32 wiedergegeben.

Die eingesetzten Fäden für die einzelnen Gewebelagen 12, 16, 18 bestehen vorzugsweise aus einem Polyester- oder einem Polyamidmaterial, wobei das Membranmaterial 34 selbst aus einem Polymermaterial besteht, vorzugsweise aus Polysulfon (PSU), das in Lösung durch Extrusion und Verfestigung mittels Kontakt mit Wasser gebildet wird.

Das erfindungsgemäße Filtermedium kann als ebenes Filtermaterial ausgebildet sein, jedoch auch als Rohrmaterial. Hierdurch lassen sich Längszugspannungen durch die durchlaufenden Längsfäden sicher aufnehmen und Spannungen am Umfang werden durch die querlaufenden Fäden (Schussfäden 24) sicher aufgenommen. Die jeweilige Umschlingung vermindert das Verschieben der Fadensysteme gegeneinander und der ungewollte Verstreckeffekt während der Beschichtung ist minimiert; wobei die derart gewebeverstärkte Filtrationskapillare sehr hohen Innendrücken und Längszügen widersteht. Verschiedene Ausführungsbeispiele der erfindungsgemäßen trägergestützten Rohrmembran haben bei Einsatz von Polysulfon für das Membranmaterial ergeben, dass bei den porösen Rohren mit einem Durchmesser von innen 8 mm und außen von 10 mm Zugfestigkeiten von 3 bis 4 N/mm² bei einer Reißdehnung von 20% erreicht werden und im dynamischen Drucktest haben solche Rohre einem Berstdruck von maximal 1,5 bar standgehalten.

Sofern im Sinne der Erfindung dieselbe Lösung zusammen mit diagonal geflochtenen Schläuchen homogen extrudiert mit denselben Dimensionen von innen 8 mm und außen von 10 mm erzeugt wird, ergeben sich Zugfestigkeiten von 20 N/mm² bei einer Reißdehnung von 50 % und im dynamischen Drucktest haben solche Rohre einem Berstdruck von 10 bar standgehalten. Dabei wird aber eine Verkürzung des Rohres von ca. 10 % beobachtet, wobei die dahingehende Verkürzungskraft zu einer starken Belastung der Haltevorrichtung der Rohre führt, welche im Extremfall Zugkräfte bis 500 kg ergeben, was zu Verformungen und zum Herausreißen von Teilen der Haltevorrichtung führen kann.

Sofern man dieselbe Lösung zusammen mit doppelt diagonal geflochtenen Schläuchen homogen extrudiert mit denselben Dimensionen, ergibt sich eine Zugfestigkeit von 50 N/mm² bei einer Reißdehnung von 20 % und im dynamischen Drucktest halten solche Rohre einem Berstdruck von 10 bis 15 bar stand, wobei aber wiederum eine Verkürzung des Rohres von 5 % beobachtet wird.

Die genannten Kettfäden, die Schussfäden und die Bindefäden können aus unterschiedlichen Polymeren bestehen, um dergestalt die mechanische Festigkeit und die chemische Beständigkeit voneinander unabhängig auf den Anwendungsfall hin optimieren zu können. Hierbei kommen insbesondere chemisch inerte Polypropylenmaterialien in Frage oder mechanisch sehr stabile Polyetheretherketon-Werkstoffe.

## Patentansprüche

1. Filtermedium mit
- mindestens einer ersten Filtermembran (10), die eine Gewebelage (12) als mechanische Stütz- und Schutzschicht aufweist;
- mindestens einer zweiten Filtermembran (14) mit einer zweiten Gewebelage (16) als mechanische Stütz- und Schutzschicht; und
- einer dritten Gewebelage (18), die sich zwischen den beiden einander benachbarten Filtermembranen (10, 14) erstreckt,
wobei über Bindefäden (26) der ersten und zweiten Gewebelage (12, 16), die die dritte Gewebelage (18) durchgreifen, die beiden benachbarten Filtermembranen (10, 14) miteinander verbunden sind.

2. Filtermedium nach Anspruch 1, **dadurch gekennzeichnet, dass** die jeweilige Gewebelage (12, 16, 18) aus Kett- und Schussfäden (20, 22; 24) besteht und dass die Gewebelagenverbindung über zusätzliche Bindefäden (26) erfolgt, die an mindestens einer Bindestelle (28) von der Gewebelage (12) der einen Filtermembran (10) in die benachbart angeordnete Gewebelage (16) der anderen Filtermembran (14) wechseln.

3. Filtermedium nach Anspruch 1, **dadurch gekennzeichnet, dass** die erste und die zweite Gewebelage (12, 16) der jeweiligen Filtermembran (10, 14) aus Schussfäden (24) als Querfadensystem besteht und dass das Längsfadensystem nur aus Bindefäden (26) als Kettfäden aufgebaut ist.

4. Filtermedium nach Anspruch 1, **dadurch gekennzeichnet, dass** die erste und die zweite Gewebelage (12, 16) der jeweiligen Filtermembran (10, 14) aus Kett- und Schussfäden (24, 26) aufgebaut ist und dass die Schussfäden (26) unter Durchgreifen der dritten Gewebelage (18) die Verbindung der einander benachbarten Filtermembranen (10, 14) herstellen.

5. Filtermedium nach einem der Ansprüche 1 bis 4, **dadurch gekennzeichnet, dass** die dritte Gewebelage (18) aus Kett- und Schussfäden (20, 22) besteht und dass die Kett- und Schussfäden (20, 22) der dritten Gewebelage (18) im Durchmesser stärker dimensioniert sind als die eingesetzten Fäden (24, 26) der ersten und der zweiten Gewebelage (12, 16) der jeweiligen Filtermembran (10, 14).

6. Filtermedium nach einem der Ansprüche 1 bis 5, **dadurch gekennzeichnet, dass** die eingesetzten Fäden (20, 22, 24, 26) aus Polyesteroder einem Polyamidmaterial bestehen und dass die erste und die zweite Filtermembran (10, 14) aus einem Polymermaterial gebildet ist.

7. Filtermedium nach einem der Ansprüche 1 bis 6, **dadurch gekennzeichnet, dass** es als ebenes Filtermaterial ausgebildet ist oder als Rohrmaterial.

## Claims

1. A filter medium with
- at least one first filter membrane (10) which has a fabric ply (12) as the mechanical support and protective layer;
- at least one second filter membrane (14) that has a second fabric ply (16) as the mechanical support and protective layer; and
- a third fabric ply (18) that extends between the two adjacent filter membranes (10, 14),
the two adjacent filter membranes (10, 14) being connected to one another by binding threads (26) of the first and the second fabric ply (12, 16) which pass through the third fabric ply (18).

2. The filter medium according to Claim 1, **characterised in that** the respective fabric ply (12, 16, 18) consists of warp and weft threads (20, 22; 24) and that the fabric plies are joined by additional binding threads (26) which change at at least one binding point (28) from the fabric ply (12) of one filter membrane (10) into the adjacent fabric ply (16) of the other filter membrane (14).

3. The filter medium according to Claim 1, **characterised in that** the first and the second fabric ply (12, 16) of the respective filter membrane (10, 14) consists of weft threads (24) as a cross thread system and that the longitudinal thread system is made up solely of binding threads (26) as warp threads.

4. The filter medium according to Claim 1, **characterised in that** the first and the second fabric ply (12, 16) of the respective filter membrane (10, 14) is made up of warp and weft threads (24, 26) and that the weft threads (26) produce the connection of the adjacent filter membranes (10, 14) as they pass through the third fabric ply (18).

5. The filter medium according to any of Claims 1 to 4, **characterised in that** the third fabric ply (18) consists of warp and weft threads (20, 22) and that the warp and weft threads (20, 22) of the third fabric ply (18) are dimensioned thicker in diameter than the threads (24, 26) of the first and the second fabric ply (12, 16) of the respective filter membrane (10, 14) that are used.

6. The filter medium according to any of Claims 1 to 5, **characterised in that** the threads (20, 22, 24, 26) used are made from a polyester or a polyamide material and that the first and the second filter membrane (10, 14) is formed from a polymer material.

7. The filter medium according to any of Claims 1 to 6, **characterised in that** it is made as a flat filter material or as a tube material.

## Revendications

1. Agent filtrant comprenant
- au moins une première membrane (10) filtrante, qui a un tissé (12) comme couche d'appui mécanique et de protection ;
- au moins une deuxième membrane (14) filtrante ayant un deuxième tissé (16) comme couche d'appui mécanique et de protection ; et
- un troisième tissé (18) qui s'étend entre les deux membranes (10, 14) filtrantes voisines l'une de l'autre ;
dans lequel les deux membranes (10, 14) filtrantes voisines sont reliées l'une à l'autre par des fils (26) de liaison du premier et du deuxième tissés (12, 16), qui traversent le troisième tissé (18).

2. Agent filtrant suivant la revendication 1, **caractérisé en ce que** les tissés (12, 16, 18) respectifs sont constitués de fils (20, 22, 24) de chaîne et de trame et **en ce que** la liaison des tissés s'effectue par des fils (26) de liaison supplémentaires qui, en au moins un point (18) de liaison, alternent du tissé (12) de l'une des membranes (10) filtrantes au tissé (16) voisin de l'autre membrane (14) filtrante.

3. Agent filtrant suivant la revendication 1, **caractérisé en ce que** le premier et le deuxième tissé (12, 16) de la membrane (10, 14) filtrante respective est constitué de fils (24) de trame comme système de fils transversaux et ce que le système de fils longitudinaux n'est formé, en tant que fils de chaîne, que de fils (26) de liaison.

4. Agent filtrant suivant la revendication 1, **caractérisé en ce que** le premier et le deuxième tissés (12, 16) de la membrane (10, 14) filtrante respective sont formés de fils (24, 26) de chaîne et de trame et ce que les fils (26) de trame ménagent, en traversant le troisième tissé (18), la liaison entre les membranes (10, 14) filtrantes voisines l'une de l'autre.

5. Agent filtrant suivant l'une des revendications 1 à 4, **caractérisé en ce que** le troisième tissé (18) est constitué de fils (20, 22) de chaîne et de trame et **en ce que** les fils (20, 22) de chaîne et de trame du troisième tissé (18) ont un diamètre plus grand que les fils (24, 26) insérés du premier et du deuxième tissés (12, 16) de la membrane (12, 14) filtrante respective.

6. Agent filtrant suivant l'une des revendications 1 à 5, **caractérisé en ce que** les fils (20, 22, 24, 26) insérés sont en polyester ou en polyamide et **en ce que** la première et la deuxième membrane (10, 14) filtrante sont en une matière polymère.

7. Agent filtrant suivant l'une des revendications 1 à 6, **caractérisé en ce qu'**il est constitué sous la forme d'une matériau filtrant plan ou sous la forme d'un matériau tubulaire.
